# EUROPEAN PATENT SPECIFICATION

(11) **EP 2 798 234 B1**
(45) Date of publication and mention of the grant of the patent: **21.02.2018**
(21) Application number: 12860041.8
(22) Date of filing: 10.12.2012
(51) Int. Cl.: F16D 35/00, F16D 48/06, F01P 7/04, F01P 7/14

(54) **REGULATOR DEVICE, AND METHOD PERTAINING TO A REGULATOR DEVICE, FOR CONTROL OF A VISCOUS COUPLING UNIT**
REGLERVORRICHTUNG UND VERFAHREN FÜR EINE REGLERVORRICHTUNG ZUR STEUERUNG EINER VISKOSEN KOPPLUNGSEINHEIT
DISPOSITIF DE RÉGULATEUR, PROCÉDÉ APPARTENANT À UN DISPOSITIF DE RÉGULATEUR, POUR LA COMMANDE D'UNE UNITÉ DE VISCOCOUPLEUR

(30) Priority: 20.12.2011 SE 1151225
(43) Date of publication of application: 05.11.2014
(73) Proprietor: Scania CV AB, 151 87 Södertälje (SE)
(72) Inventor: JOHANSSON, Svante, S-146 30 Tullinge (SE); DREXEL, Alexander, S-153 30 Järna (SE)
(74) Representative: Scania CV AB
(86) International application number: PCT/SE2012/051363
(87) International publication number: WO 2013/095264

(56) References cited:
- GB-A- 889 598
- US-A- 5 190 130
- US-A- 5 584 371
- US-A1- 2003 123 995
- US-A1- 2003 133 242
- US-A1- 2008 023 290
- US-A1- 2008 185 254
- US-A1- 2008 185 254
- US-A1- 2010 167 871
- US-B2- 7 708 127
- US-B2- 7 913 826

## Description

### Field of the invention

The present invention relates to a regulating device and a method in connection with a regulating device, for controlling a viscoclutch according to the preambles of the independent claims. The regulating device and the method are particularly applicable for regulating a viscoclutch associated with a coolant pump

### Background to the invention

In a cooling system for a vehicle with a combustion engine which has a coolant pump driven via a viscoclutch, it is known that the temperature of the cooling system may be regulated by a control unit by altering the degree of engagement of the viscoclutch. When the cooling requirement increases, the degree of engagement of the viscoclutch will also increase, i.e. the ratio between its output speed and input speed increases.
The pump is controlled by means of a viscoclutch which is itself controlled by regulating the flow of viscous oil between two discs, viz. a primary disc driven by an engine belt circuit, and a secondary disc which drives the impeller of the coolant pump. The viscoclutch works in such a way that the more the oil pumped into the working chamber between the discs, the greater the torque transmission, i.e. the greater the degree of engagement. The degree of engagement is for example the ratio between the speeds of the secondary disc and the primary disc.
It is however the case that when the degree of engagement increases, the time taken to pump the viscous liquid out from the working chamber of the viscoclutch will increase and thereby lengthen the time taken to reduce the degree of engagement to a lower value. This greater length of time for disengaging the viscoclutch from high degrees of engagement entails the disadvantage that the coolant pump continues to pump unnecessarily, resulting not only in disadvantageous cooling of the engine but also higher fuel consumption.

A valve is provided to regulate the inflow of viscous oil to the viscoclutch's working chamber. This valve is for example magnetically operated and can assume "open" and "closed" states. The amount of oil supplied is controlled by altering the ratio between the amounts of time when the valve is in these respective states. One such amount might for example be 0.25 second, in which case the valve is controlled at the rate of 4 Hz whereby regulation may be effected by indicating for how much of the time the valve is to be open. The valve being open for the whole amount of time results in maximum flow (100%) and being closed for the whole amount of time results in minimum flow (0%). The valve may be regulated to be able to assume every state between 0 and 100%.

When the valve is open, oil is pumped into the viscoclutch's working chamber and the degree of engagement is thereby controlled. The viscoclutch has on the respective primary and secondary discs a number of circular vanes with oil between them. The oil is pushed outwards in the viscoclutch by centrifugal force and is then caused to flow inwards to a gathering chamber by a pumping action exerted for example by a specially configured vane associated with the outer edge of one of the discs. Thus the greater the degree of engagement of the viscoclutch, the smaller this pumping action, i.e. emptying the viscoclutch of oil will take longer when there is a high degree of engagement.

At full disengagement the viscoclutch will always have a least degree of engagement of for example 20% (at minimum oil supply/oil volume) and a greatest full engagement of about 90% relative to the primary disc (at maximum oil supply/oil volume). Within these limits the extreme states of the viscoclutch are subject to individual variations due to spread of manufacturing tolerances and/or to ageing/wear, which means that the possible regulating range is not known.

The viscoclutch is also able, when regulated close to full engagement, to "jump up " and become stuck at full engagement. When it is firmly in full engagement or attempts are made to regulate it towards regions beyond its extreme states, the result is problems with integrator upswing. Regulating for example a regulatable coolant pump is extra-sensitive in that it has a narrow regulating range compared for example with a viscoclutch for a fan which runs with higher torque, has a broader regulating range and therefore allows more aggressive regulation. The result when using a viscoclutch in conjunction with a coolant pump is long response times which directly affect fuel consumption when disengaging the pump and cooling performance when engaging it.

Regulating systems for viscoclutches are previously known, e.g. from the patent specifications described below.

US-2003/0133242 refers to a regulating system for controlling a fan which is adapted to cooling a combustion engine and is driven via a viscoclutch. The degree of engagement of the viscoclutch is limited to prevent its exceeding an upper limit and thereby reduce the disengagement times of the viscoclutch.

US-2008/0185254 also refers to a regulating system for controlling a viscoclutch for a fan. Control is conducted inter alia by calculating the difference between desired fan speed and measured fan speed and comparing the difference during different speed states of the fan.

US-2003/0123995 refers to a viscoclutch connected to a coolant pump for cooling an engine. The degree of engagement of the viscoclutch may be altered inter alia by changing the size of a chamber in the viscoclutch for the viscous oil.

GB 889598 refers to a hydraulic driving-off clutch device for a motor vehicle, comprising a hydrodynamic clutch or torque converter and a following mechanical separating clutch, whose disengagement is effected by electrical-power means acting on part of the separating clutch and whose engagement is variably controlled by pneumatic damping means, the damping means including a throttling valve which is controlled automatically in dependence upon the difference between revolution speeds on the driving and driven sides of the separating clutch.

US 2008/023290 refers to a viscous fan drive with a front-mounted fan and electrical actuation without a tethered harness. The solution according to US 2008/023290 utilizes an inverted viscous clutch, a drive pulley, and a split electromagnetic actuator resulting in a purely mechanical package.

The object of the present invention is to propose a form of control for a viscoclutch which shortens the times taken to disengage the viscoclutch at degrees of engagement which are close to the maximum degree of engagement, and also reduces the risk of so-called integrator upswing. A further object is to improve the control of a viscoclutch at degrees of engagement which are close to the minimum degree of engagement.
A general object of the present invention is to propose an improved form of control for a viscoclutch.

### Summary of the invention

The above objects are achieved with the invention defined by the independent claims.

Preferred embodiments are defined by the dependent claims.

In one embodiment of the invention, when a desired degree of engagement is greater than a predetermined high level a control signal is delivered to the pump to work at maximum flow, and once the measured degree of engagement at maximum flow has been substantially constant for a predetermined amount of time, the pumping action is reduced until the degree of engagement is no longer constant, and when the viscoclutch begins to release, i.e. when the degree of engagement decreases, a control signal for maximum flow is delivered again.

To solve the regulating problems, the present invention comprises a set of regulating strategies whereby the regulating range, i.e. the degree of engagement of the viscoclutch, is divided into three regulating regions:
1. A prohibited upper region
2. A permissible region
3. A prohibited lower region

The permissible region is bounded upwards by an upper level and downwards by a lower level.

The prohibited regulating region:
When it receives a demand, i.e. for a desired degree of engagement, within what is deemed to be the prohibited upper region within which the viscoclutch cannot be regulated without risk of so-called integrator upswing, the regulating device switches to a first regulating strategy. If the viscoclutch is given a full control signal, the pump will be fully engaged, causing the viscoclutch to become superfluously full of oil and resulting in unnecessarily long disengagement times, as discussed above. When the maximum engagement of the viscoclutch is not known or the control signal which exactly fully engages the viscoclutch is not known, the degree of engagement of the viscoclutch is monitored. This may be done by determining the ratio between the rotation speeds of the secondary disc and the primary disc, and when this ratio (the degree of engagement) has been constant for a predetermined amount of time the degree of engagement is regarded as having stabilised. This is achieved by the pump first being given a full control signal to quickly reach full engagement. When the degree of engagement of the viscoclutch has then stabilised, the oil supply is throttled, e.g. to the latest control signal within the permissible regulating region. When thereafter the degree of engagement indicates that the viscoclutch is again about to disengage, a full control signal is again delivered until the degree of engagement has again stabilised at full engagement. This prevents the chamber from becoming full of superfluous oil and thereby results in a shorter response time for disengagement. Disengaging the viscoclutch involves first throttling the whole oil supply until the clutch is disengaged before the regulating device begins to act.

According to the invention, the oil level in the viscoclutch is thus regulated so as to be just sufficient to reach the desired high engagement level.

The prohibited lower regulating region:
When it receives a demand for a desired degree of engagement within what is deemed to be the prohibited lower region (below the extreme state of the viscoclutch), which the viscoclutch cannot be regulated to without risk of integrator upswing, the regulating device switches to a logic for full engagement by applying a second regulating strategy.

The possible degree of disengagement (least degree of engagement) of the viscoclutch varies because it depends for example on the working temperature of the visco oil, the rotation speed of the primary disc and on manufacturing tolerances and ageing. The method according to the invention therefore updates continuously the lower level which serves as the boundary of the prohibited lower regulating region. This lower level is adjusted so as to have an offset above the minimum degree of engagement. The least possible degree of engagement is detected and is set with an offset to the boundary of the prohibited lower region. A demand for a desired degree of engagement within this region will cause the pump to be directed to full disengagement. If the pump does not come back down to a previous degree of disengagement, the degree of engagement is monitored. When it has stabilised, which indicates that the pump cannot disengage further, the boundary of the prohibited lower region is raised to the prevailing level.

In a further aspect of the present invention, the following regulation may be conducted with a normal regulating strategy within the permissible regulating region:
Should the pump become stuck at full engagement when demand is within the permissible regulating region, the integrating element of the regulation is monitored. If the degree of engagement of the viscoclutch is detected within the prohibited upper region, there is great risk of the viscoclutch becoming stuck. The current integrating element is then saved. If thereafter integrator upswing takes place beyond a maximum limit, the regulator switches off and the whole oil supply is throttled to release the viscoclutch from full engagement. When the viscoclutch is again detected within the regulatable region, regulation by the regulator continues, but with quicker response because of reduced integrator upswing. If the pump is regulated back before the maximum limit for integrator upswing is reached, the logic of the PID regulator is zeroed in this respect.

The present invention affords inter alia the following advantages:
The strategy of first throttling the whole oil supply in order to release the viscoclutch from full engagement not only saves for a specific implementation about 60 seconds of response time but also prevents integrator upswing. Regulating with the first regulating strategy, i.e. monitoring and controlling the degree of engagement so that it is substantially constant, at full engagement, further shortens the disengagement time by about 10 seconds. This results inter alia in better fuel economy.

Applying special regulating strategies (the first and second regulating strategies) of switching off the regulation by the normal regulating strategy in the prohibited upper and lower regulating regions, with integrator monitoring, results in a regulating response time which may be about 60 seconds faster (if the regulator has been affected by integrator upswing). The quicker response time may be crucial in ensuring good cooling performance but does above all make more fuel saving possible.

### Brief description of drawings

Figure 1 is a schematic block diagram illustrating the present invention.
Figure 2 comprises graphs intended to illustrate the present invention.
Figures 3-5 are simplified flowcharts intended to illustrate various embodiments of the present invention.

### Detailed description of preferred embodiments of the invention

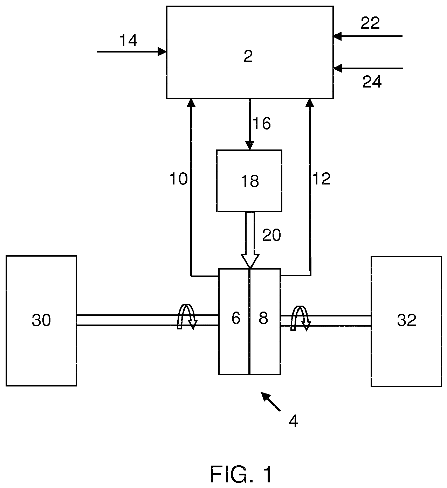

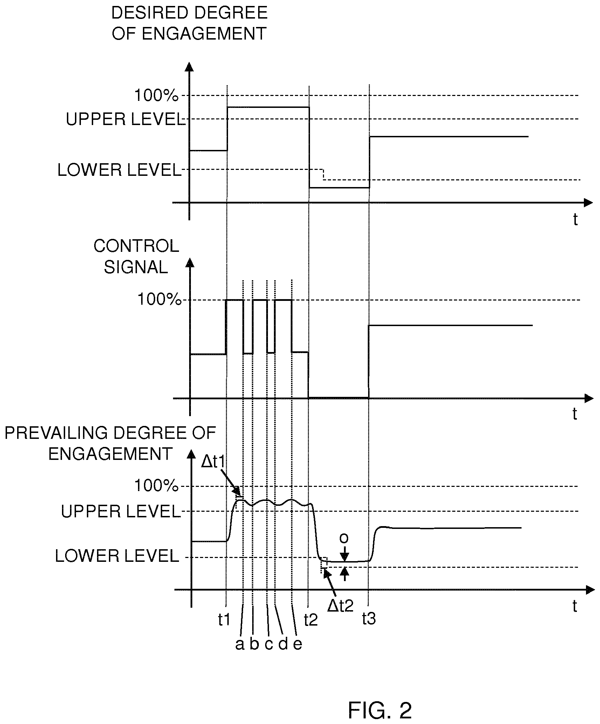

The invention will now be described in more detail with reference to the block diagram in Figure 1 and to the graphs in Figure 2, where the top graph shows a desired degree of engagement 14 in percent with respect to time t, the middle graph the control signal 16 in percent to the oil pump unit 18 with respect to time t, and the bottom graph the prevailing measured degree of engagement 15 in percent of the viscoclutch with respect to time t.

The invention thus relates to a regulating device 2 for a viscoclutch 4 of a conventional kind provided with a primary disc 6 and a secondary disc 8.
During operation, the primary disc has a first rotation speed 10 and the secondary disc a second rotation speed 12, and the regulating device 2 is adapted to receiving signals which represent these rotation speeds and a desired degree of engagement 14. The regulating device is adapted to calculating a prevailing degree of engagement 15 between the primary disc and the secondary disc as the ratio between the second rotation speed 12 and the first rotation speed 10. The degree of engagement between the discs is controlled by the regulating device on the basis of a desired degree of engagement 14. This is achieved by regulating the amount of viscous oil between the discs by delivering a control signal 16 to an oil pump unit 18 which is adapted to pumping oil 20 into the viscoclutch in response to the control signal.

If the desired degree of engagement 14 is higher than an adjustable upper level 22, the regulating device is adapted to regulating the engagement of the viscoclutch according to a first regulating strategy. This happens when the regulating device 2 receives a signal for the viscoclutch to be engaged to a desired degree of engagement 14 depicted in the top graph in Figure 2 at time t1 when the desired degree of engagement is above level 22. This first regulating strategy involves alternately changing the control signal 16 by first generating a control signal to the oil pump unit for maximum engagement. This takes place during the period t1 - a, where the control signal is depicted in the middle graph and the measured degree of engagement appears in the bottom graph.

Thereafter, when the degree of engagement has been substantially constant for longer than a predetermined first amount of time (Δt1), the control signal is changed to effect a degree of engagement below said upper level 22 until the degree of engagement is no longer substantially constant. This takes place during the period a-b. This may also be expressed in terms of examining the derivative of the degree of engagement and when the derivative has been substantially zero for a certain first amount of time, the control signal is changed (reduced) until the derivative is no longer substantially zero.
When the degree of engagement is no longer substantially constant, i.e. when its derivative is no longer substantially zero and is therefore decreasing, the control signal 16 to the oil pump unit 18 is changed back to effect maximum engagement at time b. Over the period b-c the control signal 16 is maximum, i.e. with maximum oil being pumped into the viscoclutch. When the degree of engagement has been constant for longer than Δt1 (not depicted in the drawing), the control signal 16 is changed back at time c to effect a degree of engagement below level 22. At time d the control signal 16 is changed back to maximum before reverting to a lower level at time e.

At time t2 the desired engagement level 14 is altered to a lower level.

In one embodiment the degree of engagement is regarded as substantially constant when it varies by not more than 5%.
The first amount of time Δt1 is preferably shorter than 30 seconds, e.g. about 5 seconds, but has to be long enough to make it possible to calculate the degree of engagement.

According to the invention, the oil level in the viscoclutch is thus regulated in such a way as to be just sufficient to reach the desired high engagement level. This results in quicker disengagement in that a smaller amount of oil need be pumped out from the viscoclutch.

In one embodiment, if the desired degree of engagement 14 is instead below an adjustable lower level 24, the regulating device is adapted to regulating the engagement of the viscoclutch according to a second regulating strategy which involves changing the control signal by having the control signal 16 to the oil pump 18 effect minimum engagement (see Figure 2). This takes place at time t2 and, as the top graph indicates, the desired degree of engagement 14 is here below the lower level 24 and the control signal 16 goes down to a minimum level (middle graph).
The second regulating strategy means that when the degree of engagement has been substantially constant for longer than a predetermined second amount of time (Δt2), this level of the degree of engagement at which it has been constant is determined and the lower level may then be altered to a level which depends on the level determined. The lower level 24 is preferably altered to a level which is below the measured constant degree of engagement by a predetermined offset value. This is marked "o" in the diagram where in the case illustrated the level 24 is altered (lowered) to below the measured constant degree of engagement.
The second amount of time Δt2 is preferably shorter than 30 seconds, e.g. about 5 seconds, but has to be long enough to make it possible to calculate the degree of engagement. The same value may be adopted for Δt2 as for Δt1.

A variant of the second regulating strategy when disengaging from the prohibited upper region is to throttle the whole oil supply to a desired degree of engagement which is within the permissible region.

A further variant moves step by step from full engagement to the permissible region and then to the prohibited lower region.

When the desired degree of engagement is between said upper and lower levels, the regulating device is adapted to regulating the viscoclutch according to a predetermined normal regulating strategy, e.g. with a PI or PID regulator, comprising inter alia an integrating element. This normal regulating strategy will not be described here, since it works in a conventional way.

If the prevailing degree of engagement is above said upper level, with consequent risk of the viscoclutch becoming stuck at full engagement, and a control signal to the oil pump for regulation within the permissible regulating region is generated, the integrating element of the regulation is monitored and in a further embodiment the regulating device is then adapted to storing the current value of the integrating element. If thereafter integrator upswing takes place above a maximum limit, the regulator switches off and the whole oil supply is throttled to release the viscoclutch from full engagement. When the viscoclutch is again detected within the regulatable region, regulation by regulator continues, but with quicker response because of reduced integrator upswing, i.e. the integrating element is reduced. If the pump is regulated back before the maximum limit for integrator upswing is reached, the logic of the regulator is zeroed.

In one embodiment the regulating device is adapted to regulating the degree of engagement of a viscoclutch associated with a coolant pump. The regulating device may of course also be used to regulate a viscoclutch associated with, for example, a fan.

The invention further comprises a vehicle provided with a combustion engine 30 and a coolant pump 32 intended to cool the engine and driven via a viscoclutch 4 which is regulated by a regulating device 2 as described above. The oil pump unit 18 is often an integral part of the viscoclutch.

The present invention comprises also a method for regulating a viscoclutch which is provided with a primary disc and a secondary disc, the primary disc having a first rotation speed and the secondary disc a second rotation speed.

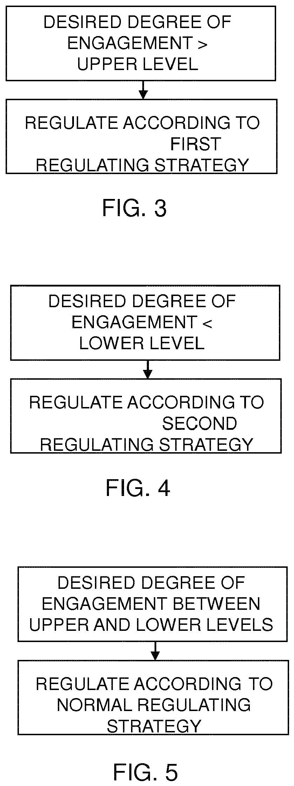

Figures 3-5 are simplified flowcharts intended to illustrate various embodiments of the present invention.

The method comprises
- determining a prevailing degree of engagement between the primary and secondary discs, e.g. in the form of the ratio between said second and first rotation speeds,
- controlling the degree of engagement between the discs on the basis of a desired degree of engagement by regulating the amount of viscous oil between them by delivering a control signal to an oil pump unit which is adapted to pumping oil into the viscoclutch in response to the control signal.

With reference to Figure 3, the method according to the invention further comprises
- if the desired degree of engagement is higher than an adjustable upper level, regulating the engagement of the viscoclutch according to a first regulating strategy which involves alternately changing the control signal by first generating a control signal to the oil pump unit for maximum engagement and thereafter, when the degree of engagement has been substantially constant for longer than a predetermined first amount of time (Δt1), changing the control signal to effect a degree of engagement below said upper level until the degree of engagement is no longer substantially constant. This embodiment is discussed in more detail above, inter alia with reference to the graphs in Figure 2.

In a further embodiment of the invention illustrated by the flowchart in Figure 4, the method comprises, if a desired degree of engagement is below an adjustable lower level, regulating the engagement of the viscoclutch according to a second regulating strategy which involves changing the control signal by having the control signal to the oil pump unit effect minimum engagement. The second regulating strategy also involves, when the degree of engagement has been substantially constant for longer than a predetermined second amount of time (Δt2), determining this level of the degree of engagement at which it has been constant, and altering the lower level to a level which depends on the level determined. Here again, Figure 2 and the above description should be referred to.

In a further embodiment of the invention, illustrated by the flowchart in Figure 5, when a desired degree of engagement is between said upper and lower levels, the regulating device is adapted to regulating the viscoclutch according to a predetermined normal regulating strategy comprising inter alia an integrating element.

If the prevailing degree of engagement is then above said upper level, the current value of the integrating element is stored. If thereafter integrator upswing occurs beyond a maximum limit, the regulator switches off and the whole oil supply is throttled to release the viscoclutch from full engagement. When the viscoclutch is again detected within the regulatable region, regulation by regulator continues, but with quicker response because of reduced integrator upswing, i.e. the integrating element is reduced. If the pump is regulated back before the maximum limit of integrator upswing is reached, the logic of the regulator is zeroed.

The method according to the present invention is preferably adapted to regulating the degree of engagement of a viscoclutch associated with a coolant pump.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A regulating device (2) for a viscoclutch (4) which is provided with a primary disc (6) and a secondary disc (8), the primary disc having a first rotation speed (10) and the secondary disc a second rotation speed (12), such that said regulating device (2) is adapted to receiving signals which represent said rotation speeds and a desired degree of engagement (14), and to determining a prevailing degree of engagement (15) between the primary disc (6) and the secondary disc (8), and the degree of engagement between the discs is controlled by the regulating device (2) on the basis of a desired degree of engagement (14) by regulating an amount of viscous oil between the discs by delivering a control signal (16) to an oil pump unit (18) which is adapted to pumping oil (20) into the viscoclutch (4) in response to the control signal, **characterised in that** when the desired degree of engagement (14) is higher than an upper level (22) the regulating device is adapted to regulating the engagement of the viscoclutch according to a first regulating strategy which involves alternately changing the control signal (16) by first generating a control signal (16) to the oil pump unit for maximum engagement and thereafter, when the degree of engagement has been substantially constant for longer than a predetermined first amount of time (Δt1), changing the control signal (16) to effect a degree of engagement below said upper level (22) until the degree of engagement is no longer substantially constant.

2. The regulating device according to claim 1, such that if a desired degree of engagement is below a lower level (24) the regulating device is adapted to regulating the engagement of the viscoclutch according to a second regulating strategy which involves changing the control signal (16) by having the control signal (16) to the oil pump unit (18) effect minimum engagement.

3. The regulating device according to claim 2, such that the second regulating strategy, when the degree of engagement has been substantially constant for longer than a predetermined second amount of time (Δt2), further comprises determining this level of the degree of engagement at which it has been constant, and altering the lower level to a level which depends on the level determined.

4. The regulating device according to any one of claims 1-3, such that said first amount of time (Δt1) is shorter than 30 seconds.

5. The regulating device according to claim 3, such that said second amount of time (Δt2) is shorter than 30 seconds.

6. The regulating device according to any one of the foregoing claims, such that the degree of engagement being substantially constant means not varying by more than 5%.

7. The regulating device according to claim 2, such that when a desired degree of engagement is between said upper level (22) and lower level (24) the regulating device is adapted to regulating the viscoclutch (4) according to a predetermined normal regulating strategy which comprises an integrating element.

8. The regulating device according to claim 7, such that when the prevailing degree of engagement is above said upper level (22) the current value of the integrating element is stored, a control signal (16) to the oil pump unit (18) for full engagement is generated and the integrating element of the normal regulating strategy is reduced to below the stored value.

9. The regulating device according to any one of the foregoing claims, such that the device is adapted to regulating the degree of engagement of a viscoclutch (4) associated with a coolant pump.

10. A vehicle provided with a combustion engine (30) and a coolant pump (32) intended to cool the engine and driven via a viscoclutch (4) which is regulated by a regulating device (2) according to any one of claims 1-9.

11. A method for regulating a viscoclutch which is provided with a primary disc and a secondary disc, the primary disc having a first rotation speed and the secondary disc a second rotation speed, which method comprises
- determining a prevailing degree of engagement between the primary and the secondary disc,
- controlling the degree of engagement between the discs on the basis of a desired degree of engagement by regulating the amount of viscous oil between them by delivering a control signal to an oil pump unit which is adapted to pumping oil into the viscoclutch in response to the control signal,
**characterised in that** the method further comprises
- when the desired degree of engagement is higher than an upper level, regulating the engagement of the viscoclutch according to a first regulating strategy which involves alternately changing the control signal by first generating a control signal to the oil pump unit for maximum engagement and thereafter, when the degree of engagement has been substantially constant for longer than a predetermined first amount of time (Δt1), changing the control signal to effect a degree of engagement below said upper level until the degree of engagement is no longer substantially constant.

12. The method according to claim 11, which, when a desired degree of engagement is below a lower level, comprises regulating the engagement of the viscoclutch according to a second regulating strategy which involves changing the control signal by having the control signal to the oil pump unit effect minimum engagement.

13. The method according to claim 12, in which the second regulating strategy, when the degree of engagement has been substantially constant for longer than a predetermined second amount of time (Δt2), involving also determining this level of the degree of engagement at which it has been constant, and altering the lower level to a level which depends on the level determined.

14. The method according to any one of claims 11-13, in which said first amount of time (Δt1) is shorter than 30 seconds.

15. The method according to claim 13, in which said second amount of time (Δt2) is shorter than 30 seconds.

16. The method according to any one of claims 11-15, in which substantially constant means that the degree of engagement varies by not more than 5%.

17. The method according to claim 12, which, when a desired degree of engagement is between said upper level (22) and lower level (24), comprises regulating the viscoclutch according to a predetermined normal regulating strategy which comprises an integrating element.

18. The method according to claim 17, which, if the prevailing degree of engagement is above said upper level, comprises storing the current value of the integrating element, generating a control signal to the oil pump unit for full engagement and reducing the integrating element of the normal regulating strategy to a value below the stored value.

19. The method according to claim according to any one of claims 11-18, adapted to regulating the degree of engagement of a viscoclutch associated with a coolant pump.

## Patentansprüche

1. Regelungsvorrichtung (2) für eine Visco-Kupplung (4) mit einer Primärscheibe (6) und einer Sekundärscheibe (8), wobei die Primärscheibe eine erste Drehgeschwindigkeit (10) und die Sekundärscheibe eine zweite Drehgeschwindigkeit (12) hat, so dass die Regelungsvorrichtung (2) zum Empfangen von Signalen eingerichtet ist, die die Drehgeschwindigkeiten und einen gewünschten Eingriffsgrad (14) repräsentieren, und zum Bestimmen eines vorherrschenden Eingriffsgrads (15) zwischen der Primärscheibe (6) und der Sekundärscheibe (8), und der Eingriffsgrad zwischen den Scheiben von der Regelungsvorrichtung (2) auf Basis des gewünschten Eingriffsgrads (14) durch Regeln der Menge des viskosen Öls zwischen den Scheiben gesteuert wird, indem ein Steuersignal (16) an eine Ölpumpeneinheit (18) gesendet wird, die als Antwort auf das Steuersignal Öl (20) in die Visco-Kupplung (4) pumpt,
**dadurch gekennzeichnet, dass** dann, wenn der gewünschte Eingriffsgrad (14) größer ist als ein oberes Niveau (22), die Regelungsvorrichtung dazu eingerichtet ist, den Eingriff der Visco-Kupplung gemäß einer ersten Regelungsstrategie zu regeln, die das abwechselnde Ändern des Steuersignals (16) zunächst durch Erzeugen eines Steuersignals (16) an die Ölpumpeneinheit (18) zum maximalen Eingriff und danach, wenn der Eingriffsgrad länger als eine vorgegebene erste Zeitdauer (Δt1) im Wesentlichen konstant war, das Ändern des Steuersignals (16), um einen Eingriffsgrad unter dem oberen Niveau (22) zu bewirken, bis der Eingriffsgrad nicht länger im Wesentlichen konstant ist, beinhaltet.

2. Regelungsvorrichtung nach Anspruch 1, so dass dann, wenn ein gewünschter Eingriffsgrad unter einem unteren Niveau (24) liegt, die Regelungsvorrichtung dazu eingerichtet ist, den Eingriff der Visco-Kupplung gemäß einer zweiten Regelungsstrategie zu regeln, die das Ändern des Steuersignals (16) beinhaltet, indem das Steuersignal (16) an die die Ölpumpeneinheit (18) den minimalen Eingriff bewirkt.

3. Regelungsvorrichtung nach Anspruch 2, so dass die zweite Regelungsstrategie dann, wenn der Eingriffsgrad länger als eine vorgegebene zweite Zeitdauer (Δt2) im Wesentlichen konstant war, ferner die Bestimmung des Niveaus des Eingriffsgrads, bei dem er konstant war, aufweist, und die Änderung des unteren Niveaus auf ein Niveau, das von dem bestimmten Niveau abhängt.

4. Regelungsvorrichtung nach einem der Ansprüche 1 bis 3, so dass die erste Zeitdauer (Δt1) kürzer als 30 Sekunden ist.

5. Regelungsvorrichtung nach Anspruch 3, so dass die zweite Zeitdauer (Δt2) kürzer als 30 Sekunden ist.

6. Regelungsvorrichtung nach einem der vorigen Ansprüche, so dass 'der Eingriffsgrad ist im Wesentlichen konstant' bedeutet, dass er um nicht mehr als 5% variiert.

7. Regelungsvorrichtung nach Anspruch 2, so dass dann, wenn ein gewünschter Eingriffsgrad zwischen dem oberen Niveau (22) und dem unteren Niveau (24) liegt, die Regelungsvorrichtung zum Regeln der Visco-Kupplung (4) gemäß einer vorgegebenen normalen Regelungsstrategie regelt, die ein integrierendes Element aufweist.

8. Regelungsvorrichtung nach Anspruch 7, so dass dann, wenn der vorherrschende Eingriffsgrad über dem oberen Niveau (22) liegt, der aktuelle Wert des integrierenden Elements gespeichert, ein Steuersignal (16) zur Ölpumpeneinheit (18) für den vollen Eingriff erzeugt und das integrierende Element der normalen Regelungsstrategie unter den gespeicherten Wert verringert wird.

9. Regelungsvorrichtung nach einem der vorigen Ansprüche, so dass die Vorrichtung zum Regeln des Eingriffsgrads einer zu einer Kühlmittelpumpe gehörigen Visco-Kupplung (4) eingerichtet ist.

10. Fahrzeug mit einem Verbrennungsmotor (30) und einer Kühlmittelpumpe (32) zur Kühlung des Verbrennungsmotors, angetrieben über eine Visco-Kupplung (4), die von einer Regelungsvorrichtung (2) nach einem der Ansprüche 1 bis 9 geregelt wird.

11. Verfahren zum Regeln einer Visco-Kupplung mit einer Primär- und einer Sekundärscheibe, wobei die Primärscheibe eine erste Drehgeschwindigkeit und die Sekundärscheibe eine zweite Drehgeschwindigkeit hat, wobei das Verfahren aufweist
- Bestimmen eines vorherrschenden Eingriffsgrads zwischen der Primär- und der Sekundärscheibe,
- Steuern des Eingriffsgrads zwischen den Scheiben auf Basis des gewünschten Eingriffsgrads durch Regeln der Menge des viskosen Öls zwischen ihnen, indem ein Steuersignal an eine Ölpumpeneinheit gesendet wird, die als Antwort auf das Steuersignal Öl in die Visco-Kupplung pumpt,
**dadurch gekennzeichnet, dass** das Verfahren ferner aufweist
- wenn der gewünschte Eingriffsgrad höher ist als ein oberes Niveau, Regeln des Eingriffs der Visco-Kupplung gemäß einer ersten Regelungsstrategie, die das abwechselnde Ändern des Steuersignals zunächst durch Erzeugen eines Steuersignals an die Ölpumpeneinheit zum maximalen Eingriff und danach, wenn der Eingriffsgrad länger als eine vorgegebene erste Zeitdauer (Δt1) im Wesentlichen konstant war, das Ändern des Steuersignals, um einen Eingriffsgrad unter dem oberen Niveau zu bewirken, bis der Eingriffsgrad nicht länger im Wesentlichen konstant ist, beinhaltet.

12. Verfahren nach Anspruch 11, das bei einem gewünschten Eingriffsgrad unter einem unteren Niveau liegt, das Regeln des Eingriffs der Visco-Kupplung gemäß einer zweiten Regelungsstrategie aufweist, die das Ändern des Steuersignals beinhaltet, indem das Steuersignal an die die Ölpumpeneinheit den minimalen Eingriff bewirkt.

13. Verfahren nach Anspruch 12, bei dem die zweite Regelungsstrategie, wenn der Eingriffsgrad länger als eine vorgegebene zweite Zeitdauer (Δt2) im Wesentlichen konstant war, außerdem die Bestimmung des Niveaus des Eingriffsgrads, bei dem er konstant war, beinhaltet, sowie die Änderung des unteren Niveaus auf ein Niveau, das von dem bestimmten Niveau abhängt.

14. Verfahren nach einem der Ansprüche 11 bis 13, bei dem die erste Zeitdauer (Δt1) kürzer als 30 Sekunden ist.

15. Verfahren nach Anspruch 13, bei dem die zweite Zeitdauer (Δt2) kürzer als 30 Sekunden ist.

16. Verfahren nach einem der Ansprüche 11 bis 15, bei dem der Eingriffsgrad ist im Wesentlichen konstant' bedeutet, dass er um nicht mehr als 5% variiert.

17. Verfahren nach Anspruch 12, das bei einem gewünschten Eingriffsgrad zwischen dem oberen Niveau und dem unteren Niveau das Regeln der Visco-Kupplung gemäß einer vorgegebenen normalen Regelungsstrategie aufweist, die ein integrierendes Element aufweist.

18. Verfahren nach Anspruch 17, das bei vorherrschendem Eingriffsgrad über dem oberen Niveau das Speichern des aktuellen Wertes des integrierenden Elements, das Erzeugen eines Steuersignals zur Ölpumpeneinheit für den vollen Eingriff und das Verringern des integrierenden Elements der normalen Regelungsstrategie auf einen Wert unter den gespeicherten Wert aufweist.

19. Verfahren nach einem der Ansprüche 11 bis 18, das zum Regeln des Eingriffsgrads einer zu einer Kühlmittelpumpe gehörigen Visco-Kupplung eingerichtet ist.

## Revendications

1. Dispositif de régulation (2) pour un viscocoupleur (4) qui est muni d'un disque primaire (6) et d'un disque secondaire (8), le disque primaire ayant une première vitesse de rotation (10) et le disque secondaire une seconde vitesse de rotation (12), de sorte que ledit dispositif de régulation (2) est adapté pour recevoir des signaux qui représentent lesdites vitesses de rotation et un degré de prise souhaité (14), et pour déterminer un degré de prise prédominant (15) entre le disque primaire (6) et le disque secondaire (8), et le degré de prise entre les disques est commandé par le dispositif de régulation (2) sur la base d'un degré de prise souhaité (14) en régulant une quantité d'huile visqueuse entre les disques en délivrant un signal de commande (16) à une unité de pompe à huile (18) qui est adaptée pour pomper de l'huile (20) dans le viscocoupleur (4) en réponse au signal de commande, **caractérisé en ce que**, lorsque le degré de prise souhaité (14) est supérieur à un niveau supérieur (22), le dispositif de régulation est adapté pour réguler la prise du viscocoupleur conformément à une première stratégie de régulation qui implique de changer alternativement le signal de commande (16) en générant tout d'abord un signal de commande (16) dans l'unité de pompe à huile pour une prise maximale et ensuite, lorsque le degré de prise a été sensiblement constant pendant plus longtemps qu'une première quantité de temps prédéterminée (Δt1), de changer le signal de commande (16) pour obtenir un degré de prise inférieur audit niveau supérieur (22) jusqu'à ce que le degré de prise ne soit plus sensiblement constant.

2. Dispositif de régulation selon la revendication 1, dans lequel, si un degré de prise souhaité est inférieur à un niveau inférieur (24), le dispositif de régulation est adapté pour réguler la prise du viscocoupleur conformément à une seconde stratégie de régulation qui implique de changer le signal de commande (16) en faisant en sorte que le signal de commande (16) dans l'unité de pompe à huile (18) aboutisse à une prise minimale.

3. Dispositif de régulation selon la revendication 2, dans lequel la seconde stratégie de régulation, lorsque le degré de prise a été sensiblement constant pendant plus longtemps qu'une seconde quantité de temps prédéterminée (Δt2), comprend en outre la détermination de ce niveau du degré de prise auquel il a été constant, et la modification du niveau inférieur en un niveau qui dépend du niveau déterminé.

4. Dispositif de régulation selon l'une quelconque des revendications 1 à 3, dans lequel ladite première quantité de temps (Δt1) est inférieure à 30 secondes.

5. Dispositif de régulation selon la revendication 3, dans lequel ladite seconde quantité de temps (Δt2) est inférieure à 30 secondes.

6. Dispositif de régulation selon l'une quelconque des revendications précédentes, dans lequel le degré de prise étant sensiblement constant signifie qu'il ne varie pas de plus de 5 %.

7. Dispositif de régulation selon la revendication 2, dans lequel lorsque un degré de prise souhaité est compris entre lesdits niveau supérieur (22) et niveau inférieur (24), le dispositif de régulation est adapté pour réguler le viscocoupleur (4) conformément à une stratégie de régulation normale prédéterminée qui comprend un élément d'intégration.

8. Dispositif de régulation selon la revendication 7, dans lequel lorsque le degré de prise prédominant est au-dessus dudit niveau supérieur (22), la valeur courante de l'élément d'intégration est mémorisée, un signal de commande (16) dans l'unité de pompe à huile (18) pour une prise totale est généré et l'élément d'intégration de la stratégie de régulation normale est réduit à une valeur au-dessous de la valeur mémorisée.

9. Dispositif de régulation selon l'une quelconque des revendications précédentes, dans lequel le dispositif est adapté pour réguler le degré de prise d'un viscocoupleur (4) associé à une pompe à liquide de refroidissement.

10. Véhicule équipé d'un moteur à combustion (30) et d'une pompe à liquide de refroidissement (32) destinée à refroidir le moteur et entraînée par un viscocoupleur (4) qui est régulé par un dispositif de régulation (2) selon l'une quelconque des revendications 1 à 9.

11. Procédé de régulation d'un viscocoupleur qui est muni d'un disque primaire et d'un disque secondaire, le disque primaire ayant une première vitesse de rotation et le disque secondaire une seconde vitesse de rotation, lequel procédé comprend les étapes consistant à
- déterminer un degré de prise prédominant entre le disque primaire et le disque secondaire,
- commander le degré de prise entre les disques sur la base d'un degré de prise souhaité en régulant la quantité d'huile visqueuse entre ceux-ci en délivrant un signal de commande dans une unité de pompe à huile qui est adaptée pour pomper de l'huile dans le viscocoupleur en réponse au signal de commande,
**caractérisé en ce que** le procédé comprend en outre
- lorsque le degré de prise souhaité est supérieur à un niveau supérieur, réguler la prise du viscocoupleur conformément à une première stratégie de régulation qui implique de changer alternativement le signal de commande en générant tout d'abord un signal de commande dans l'unité de pompe à huile pour une prise maximale et ensuite, lorsque le degré de prise a été sensiblement constant pendant plus longtemps qu'une première quantité de temps prédéterminée (Δt1), de changer le signal de commande pour obtenir un degré de prise inférieur audit niveau supérieur jusqu'à ce que le degré de prise ne soit plus sensiblement constant.

12. Procédé selon la revendication 11, qui, lorsque un degré de prise souhaité est inférieur à un niveau inférieur, comprend la régulation de la prise du viscocoupleur conformément à une seconde stratégie de régulation qui implique de changer le signal de commande en faisant en sorte que le signal de commande dans l'unité de pompe à huile aboutisse à une prise minimale.

13. Procédé selon la revendication 12, dans lequel la seconde stratégie de régulation, lorsque le degré de prise a été sensiblement constant pendant plus longtemps qu'une seconde quantité de temps prédéterminée (Δt2), implique également la détermination de ce niveau du degré de prise auquel il a été constant, et la modification du niveau inférieur en un niveau qui dépend du niveau déterminé.

14. Procédé selon l'une quelconque des revendications 11 à 13, dans lequel ladite première quantité de temps (Δt1) est inférieure à 30 secondes.

15. Procédé selon la revendication 13, dans lequel ladite seconde quantité de temps (Δt2) est inférieure à 30 secondes.

16. Procédé selon l'une quelconque des revendications 11 à 15, dans lequel sensiblement constant signifie que le degré de prise ne varie pas de plus de 5 %.

17. Procédé selon la revendication 12, qui, lorsqu'un degré de prise souhaité est compris entre lesdits niveau supérieur (22) et niveau inférieur (24), comprend la régulation du viscocoupleur conformément à une stratégie de régulation normale prédéterminée qui comprend un élément d'intégration.

18. Procédé selon la revendication 17, qui, si le degré de prise prédominant est au-dessus dudit niveau supérieur, comprend la mémorisation de la valeur courante de l'élément d'intégration, la génération d'un signal de commande dans l'unité de pompe à huile pour une prise totale et la réduction de l'élément d'intégration de la stratégie de régulation normale à une valeur inférieure à la valeur mémorisée.

19. Procédé selon l'une quelconque des revendications 11 à 18, adapté pour réguler le degré de prise d'un viscocoupleur associé à une pompe à liquide de refroidissement.
